(19) Europäisches Patentamt
European Patent Office
Office européen des brevets

(11) EP 1 465 079 A2

# (12) EUROPEAN PATENT APPLICATION

(43) Date of publication:
06.10.2004 Bulletin 2004/41

(51) Int Cl.[7]: G06F 17/10

(21) Application number: 02293271.9

(22) Date of filing: 31.12.2002

(84) Designated Contracting States:
AT BE BG CH CY CZ DE DK EE ES FI FR GB GR IE IT LI LU MC NL PT SE SI SK TR
Designated Extension States:
AL LT LV MK RO

(71) Applicant: Motorola Inc.
Schaumburg, IL 60196 (US)

(72) Inventors:
- Muck, Markus
75013 Paris (FR)
- Miet, Xavier
92130 Issy Les Moulineaux (FR)
- Buzenac-Settineri, Véronique
91300 Massy (FR)
- Mazet, Laurent
75010 Paris (FR)

(74) Representative: Wharmby, Martin Angus
Motorola Centre de Recherche,
Parc Technologique de St. Aubin,
Route de L'Orme au Merisier,
Immeuble Columbia
91190 Gif-sur-Yvette (FR)

## (54) Apparatus and method of calculating a logarithm of a sum of exponentials

(57) Apparatus, for example a digital communication unit (200), for performing one or more probabilistic calculations wherein one or more of the probabilistic calculations is a logarithm of a sum of exponentials. The apparatus comprises a processor that calculates a logarithm of a sum of exponentials (340) using a hyperbolic cosine function (320). Preferably, the hyperbolic cosine function (320) is used as a correction term and implemented using an analytical approach. A method of calculating a logarithm of a sum of exponentials (340) is also provided.

The proposed implementation of calculating a logarithm of a sum of exponentials using a hyperbolic cosine approach does not need additional memory for, say, a look-up table. Thus, it provides particular advantage in a hardware implementation, where memory requires additional cost, space and peripheral devices, for example to perform testing, etc.

FIG. 3

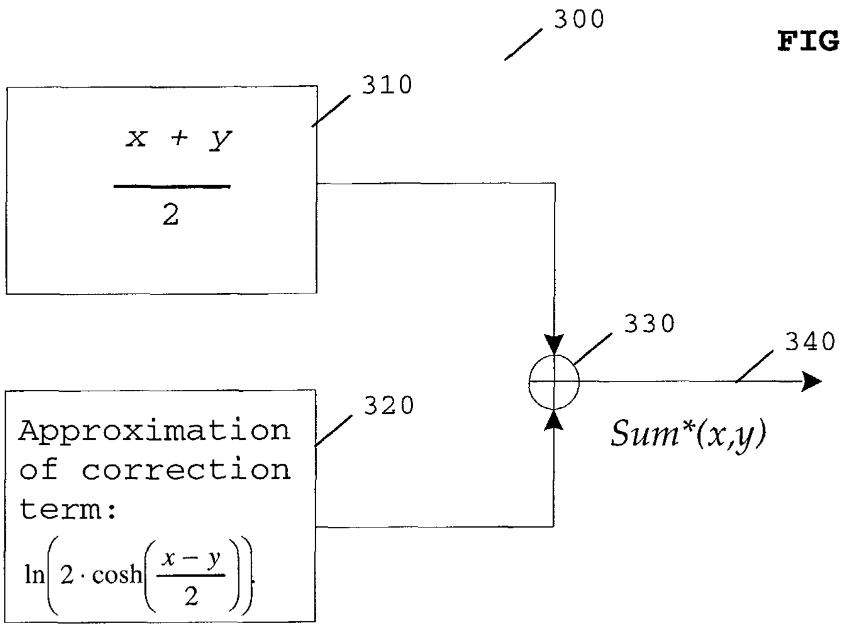


EP 1 465 079 A2

## Description

### Field of the Invention

This invention relates to an application of a mathematical function to calculate a logarithm of a sum of exponentials. The invention is applicable to, but not limited to, an improved implementation structure for calculating a logarithm of a sum of exponentials in a digital communication receiver.

### Background of the Invention

Wireless communication systems, for example digital cellular telephony or digital private mobile radio communication systems, typically provide for radio telecommunication links to be arranged between a plurality of base transceiver stations (BTSs) and a plurality of subscriber units, often termed mobile stations (MSs). Wireless communication systems are distinguished over fixed communication systems, such as the public switched telephone network (PSTN), principally in that mobile stations move between BTS and/or different service providers. In doing so wireless communication units encounter varying radio propagation environments. Thus, wireless digital communication technology has been developed to cope with the peculiarities of, for example, Rayleigh fading, varying signal strength, varying propagation conditions, etc.

Furthermore, a number of present-day communication receivers are designed to provide an estimate of the effect induced by the radio communication channel on the data being transmitted. Channel estimation is required so that the received data can be equalised to reduce, restore or minimise signal degradation caused by transmission channel impairments. Thus, a number of digital coding/ decoding and digital modulation/demodulation techniques have been developed to optimise the use of, what is effectively, a finite amount of radio frequency spectrum.

A current popular approach in decoding and demodulating received signals is to use an iterative algorithm. Examples of receiver functions that employ iterative algorithms include: a turbo-decoder, a BCJR decoder (as described in L. R. Bahl, J. Cocke, F. Jelinek, J. Raviv: Optimal Decoding of Linear Codes for Minimizing Symbol Error Rate, IEEE Transactions on Information Theory, March 1974), a turbo-demodulation, etc. It is also known that a key function in implementing such iterative algorithms is the requirement to perform efficiently a number of mathematical functions including a logarithm of the sum of exponentials.

The classical approach to implementing a logarithm of the sum of exponentials is to use the so-called 'Max-Star' (Max*) approach. The Max-star approach 100 is illustrated in FIG. 1, and is further described in the paper titled 'VLSI Architectures for the forward-Backward Algorithm', submitted to IEEE Transactions on Communications and authored by E. Boutillon et al.

In the context of the present invention, the following logarithm of sum of (two or more) exponentials is termed the Sum-star (or Sum*) operator 140.

$$Sum^*(x, y) = \ln\left(e^x + e^y\right) \qquad [1]$$

and can be expressed as:

$$Sum^*(x, y) = \ln\left(e^x + e^y\right) = \max(x, y) + \ln\left(1 + e^{-|x-y|}\right) \qquad [2]$$

This expression of the Sum-star as the max(x,y), plus a correction term, is widely termed the "max-star (or Max*) Operation" 140. In this regard, as illustrated in FIG. 1, the Max* Operation 140 results from a summation 130 of the functions max(x,y) 110, giving:

the maximum value of x,y as:
Max(x,y)= x if x>=y; and
y, otherwise;

and the term

$$\ln\left(1+e^{-|x-y|}\right)$$

120, where |.| indicates the calculation of the absolute value and 'ln' is the natural logarithm.

Within the Max* operation, the term

$$\ln\left(1+e^{-|x-y|}\right)$$

is termed the "correction term". The correction term has the following characteristics:

(i)

$$\ln\left(1+e^{-|x-y|}\right)\rightarrow 0\ for\ |x-y|\rightarrow\infty\ . \qquad [3]$$

In fact, the approximation

$$\ln\left(1+e^{-|x-y|}\right)\rightarrow 0$$

is already valid for medium sized |*x*-*y*|.

(ii) The function

$$\ln\left(1+e^{-|x-y|}\right)$$

120 is difficult to approximate analytically (i.e. by several simple functions, etc.) in a simple manner. Therefore, notably, its values are invariably written into a look-up table.

In a hardware receiver implementation, the use of look-up tables is to be avoided if possible. Look-up tables require substantial amounts of memory, and therefore increase cost and footprint space. Furthermore, increasing the memory requirements in a circuit such as a communication receiver requires, in turn, additional testing.

Furthermore, as indicated above, the 'correction term'

$$\ln\left(1+e^{-|x-y|}\right)$$

cannot be easily approximated by a simple function that is implementable in hardware. This is problematic in some implementations where a hardware-based approach is favoured (for some reason).

Thus, there exists a need in the field of the present invention to provide an apparatus and a method for implementing a more efficient and improved mechanism to calculate a logarithm of a sum of exponentials, wherein at least some of the aforementioned disadvantages may be alleviated.

**Statement of Invention**

In accordance with the present invention, an apparatus and a method of calculating a logarithm of a sum of exponentials are provided, as described in the appended Claims.

**Brief Description of the Drawings**

FIG. 1 illustrates a known topology for implementing a Max* based logarithm of the sum of exponentials.

Exemplary embodiments of the present invention will now be described, with reference to the accompanying drawings, in which:

FIG. 2 illustrates a wireless digital communication unit adapted in accordance with a preferred embodiment of the present invention;

FIG. 3 illustrates a topology for implementing a logarithm of the sum of exponentials in accordance with a preferred embodiment of the present invention;

FIG. 4 and FIG. 6 illustrate simulation results of the logarithm of the sum of exponentials according to the preferred embodiment of the present invention when applied in different contexts; and

FIG. 5 shows a well-known tree-based structure for implementing a logarithm of the sum of exponentials that can be used in a preferred embodiment of the present invention.

**Description of Preferred Embodiments**

In summary, the preferred embodiment of the present invention proposes a Hyperbolic-Cosine approach to calculate a logarithm of the sum of exponentials. For clarity purposes only, a logarithm of a sum of two or more exponentials may hereinafter be referred to as a Sum-star (or *Sum**) function. In particular, the inventive concepts described herein introduce a very efficient mechanism to compute the *'non-trivial'* expression

$$Sum^*(x, y) = \ln\left(e^x + e^y\right)$$

in a very simple manner.

Advantageously, the Hyperbolic-Cosine approach has been developed so that it can be implemented as a simple topology with minimal performance cost. Thus, the hyperbolic-cosine approach of the preferred embodiment of the present invention is particularly useful in a hardware or firmware communication receiver design. This advantage is achieved as the logarithm of the sum of exponentials is approximated by simple functions and can thus be directly implemented without requiring additional memory elements/look-up tables, etc.

Referring now to FIG. 2, there is shown a block diagram of a wireless digital communication unit, hereinafter referred to as a mobile station (MS) 200, which is adapted to support the inventive concepts of the preferred embodiments of the present invention. Although the preferred embodiment of the present invention is described with reference to calculating a logarithm of a sum of exponentials in a receiver of a digital communication unit, it is envisaged that any apparatus that includes a processor for performing one or more probabilistic calculations may benefit from the inventive concepts hereinbefore described.

As known in the art, the MS 200 comprises, for example, standard radio frequency components and circuits, such as an antenna 202 preferably coupled to an antenna switch 204 that provides isolation between a receive and a transmit chain within the MS 200. A receiver chain typically includes receiver front-end circuitry 206 (effectively providing reception, filtering and intermediate or base-band frequency conversion). The front-end circuit 206 is serially coupled to a signal processing function 208. An output from the signal processing function is provided to a suitable output device 210, such as a speaker.

The signal processing function 208 performs all signal processing functions for the MS 200, including, for example, demodulation, de-mapping, bit de-interleaving, channel estimation and decoding, as known in the art.

In accordance with the preferred embodiments of the present invention, the operation of the signal processing function 208 has been adapted to support the inventive concepts herein described. In particular, the signal processing function 208 calculates any logarithm of a sum of exponentials by applying a hyperbolic-cosine function, as described further with respect to FIG. 3.

For completeness, the receiver chain also includes received signal strength indicator (RSSI) circuitry 212 coupled to a controller 214, which maintains overall subscriber unit control. The controller 214 is also coupled to the receiver front-end circuitry 206 and the signal processing function 208 (generally realised by a digital signal processor (DSP)). The controller 214 may therefore receive bit error rate (BER) or frame error rate (FER) data from recovered information. The controller 214 is coupled to the memory device 216 for storing operating regimes, such as decoding/ encoding functions and the like. A timer 218 is typically coupled to the controller 214 to control the timing of operations (transmission or reception of time-dependent signals) within the MS 200. In the context of the present invention, the timer 218 dictates the timing of speech signals, in the transmit (encoding) path and/or the receive (decoding) path.

As regards the transmit chain, as also known in the art, this essentially includes an input device, such as a microphone transducer coupled in series via transmit signal processor 228 to a transmitter/ modulation circuit 222. Thereafter, any transmit signal is passed through a power amplifier 224 to be radiated from the antenna 202. The transmitter/ modulation circuitry 222 and the power amplifier 224 are operationally responsive to the controller, with an output from the power amplifier coupled to the duplex filter or circulator 204. The transmitter/ modulation circuitry 222 and receiver front-end circuitry 206 comprise frequency up-conversion and frequency down-conversion functions (not shown).

Of course, the various components within the MS 200 can be arranged in any suitable functional topology that is able to utilise the inventive concepts of the present invention. Furthermore, the various components within the MS 200 can be realised in discrete or integrated component form, with an ultimate structure therefore being merely an arbitrary selection. It is within the contemplation of the invention that a preferred decoding and/or demodulation function can be implemented in software, firmware or hardware, with the function being implemented in a software processor (or indeed a digital signal processor (DSP)), merely a preferred option.

It is known that the Sum-star Operator (*Sum**) can be defined as:

$$\underset{n=0}{\overset{N-1}{Sum^*}} x_n = \ln\left(\sum_{n=0}^{N-1} e^{x_n}\right) \qquad [4]$$

This Sum* Operator can be constructed as:

$$Sum^*(x, y) = \ln\left(e^x + e^y\right). \qquad [5]$$

The derivation of

$$\underset{n=0}{\overset{N-1}{Sum^*}} x_n = \ln\left(\sum_{n=0}^{N-1} e^{x_n}\right),$$

based on the $Sum^*(x, y) = \ln(e^x + e^y)$, is relatively straightforward. For the sake of simplicity, only the latter derivation [4] is used to explain the preferred embodiment of the present invention, as detailed below.

In accordance with the preferred embodiment of the present invention, a new approach for the implementation of the ***Sum**** **Operator** (calculating a logarithm of a sum of exponentials) is proposed. The inventors propose that the $Sum^*(x, y) = \ln(e^x + e^y)$ is expressed, without any approximation, as:

$$Sum^*(x, y) = \ln\left(e^x + e^y\right) = \ln\left(e^{\frac{x+y}{2}}\right) + \ln\left(e^{\frac{x-y}{2}} + e^{-\frac{(x-y)}{2}}\right) = \frac{x+y}{2} + \ln\left(2 \cdot \cosh\left(\frac{x-y}{2}\right)\right) \qquad [6]$$

Notably, in this context, the expression:

$$\ln\left(2\cdot\cosh\left(\frac{x-y}{2}\right)\right) \qquad [7]$$

may be defined as the 'correction term'. The hyperbolic cosine (cosh) function has the following characteristics:

(i) ln(2·cosh($x$))=ln(2)+ln(cosh($x$)) is symmetric: as cosh($x$) = cosh(- $x$). ; and
(ii) The derivation $\frac{\partial}{\partial x}$ln(2·cosh($x$)) = tanh($x$) $\to$ 1 *for* $x \to \infty$.

Thus, the expression in [8] below tends towards a very simple asymptotic function:

$$\ln(2\cdot\cosh(x))=\ln(2)+\ln(\cosh(x)) \qquad [8]$$

Indeed, equation [8] can be approximately replaced by its asymptotic function for a sufficiently large x, usually when $x > 3$.

Referring now to FIG. 3, a topology for implementing a logarithm of a sum of exponentials calculation is illustrated in accordance with a preferred embodiment of the present invention. As indicated in FIG. 3, the function [8] can be expressed without any approximation by two functions 310, 320:

(i) (x+y)/2; usually implemented without any approximation in hardware, and

(ii)

$$\ln\left(2\cdot\cosh\left(\frac{x-y}{2}\right)\right).$$

This term is usually implemented as an approximation (for example an approximation of the correction term 320).

These two functions 310, 320 are combined in summation function 330 to produce a Sum-star Operation 340.

Referring now to FIG. 4, a graph 400 illustrates the approximation of equation [7] by two simple linear functions. This approximation is not perfect, but performs reasonably well. It is noteworthy that near-perfect approximations are obtained for a 2nd or 3rd order approximation. FIG. 6 demonstrates that the approximation of equation [7] by two linear functions is leading to acceptable results.

It is within the contemplation of the present invention that many other approximations of the correction term [7] can be used. In a similar vein, it is within the contemplation of the present invention that many other implementation functions may be used, for example, higher order approximations or using more than two linear functions, etc. One example of a mathematical implementation is:

$$\ln\left(2\cdot\cosh\left(\frac{x-y}{2}\right)\right)\approx\begin{cases}0.7 & if \quad \left|\frac{x-y}{2}\right|<0.7\\ \left|\frac{x-y}{2}\right| & if \quad \left|\frac{x-y}{2}\right|\geq 0.7\end{cases}. \qquad [9]$$

Another possible example would be:

$$\ln\left(\cosh\left(\frac{x-y}{2}\right)\right).$$

In equation [9], it is noted that, dependent upon the implementation used, the value '0.7' may be replaced by other more suitable values. Therefore, the value '0.7' should be viewed as only a preferred value, in the preferred mathematical implementation example.

The preferred hyperbolic cosine function offers particular benefits in a hardware receiver implementation, since it enables a very simple approximation of the function

$$Sum^{*}(x, y) = \ln\left(e^{x} + e^{y}\right),$$

which leads to a new readily implementable correction term. This is in direct contrast to the classical approach that is based upon a look-up table.

It is within the contemplation of the present invention that the Sum-star approach can be implemented either in software, firmware or hardware. Furthermore, the inventive concepts are applicable in many applications, including all algorithms that involve a Sum* operator, such as turbo-codes.

Referring now to FIG. 5, the general expression [4] is, for example, implemented by using a well-known tree-structure of operators [5]. As shown, at each branch of the tree structure, the operation

$$Sum^{*}(x, y) = \ln\left(e^{x} + e^{y}\right)$$

is performed. Possible implementation solutions of this operation are presented above. Advantageously, in this manner, the preferred embodiment of the present invention can be applied to well known implementations in order to calculate a logarithm of a sum of two or more exponentials using this tree structure.

Referring now to FIG. 6, a graph 600 illustrates a simulated performance of a receiver employing a Sum* Operation according to the aforementioned inventive concepts. FIG. 6 presents the simulation results based on a 64-carrier frequency orthogonal frequency division multiplex (OFDM) modulation, with 16-QAM constellations and a Rayleigh fading channel. The bit-error-rate (BER) is shown over the signal-to-noise ratio (SNR), here defined as data symbol power over noise power. FIG. 6 clearly illustrates that even the very simple approximation of the hyperbolic cosine functions leads to very little performance loss when compared to a full-precision implementation. The hyperbolic cosine approximation, in this case, is implemented by simply employing two linear functions, as illustrated in FIG. 3.

In summary, the inventive concepts hereinbefore described propose an improved mechanism for implementing a Sum-star Operation and particularly an algorithm of the sum of exponentials. The proposed implementation is of particular use in a hardware communication receiver implementation.

Thus, it is within the contemplation of the invention that any applications where the calculation:

$$Sum^{*}(x, y) = \ln\left(e^{x} + e^{y}\right)$$ , or more generally, [4]

is required, such as turbo-decoders, BCJR decoders, turbo-demodulation, etc. may benefit from the inventive concepts described herein. More generally, the inventive concepts of the present invention can be applied to any number of estimation algorithms and/or probabilistic calculations, where expressions such as [4] and [5] occur.

Although the preferred embodiment of the present invention has been described with reference to calculating a logarithm of a sum of exponentials in a receiver of a digital communication unit, it is envisaged that any apparatus that includes a processor for performing one or more probabilistic calculations may benefit from the inventive concepts hereinbefore described. As one of many examples, it is envisaged that a speech recognition unit may use the aforementioned concepts to calculate a logarithm of a sum of exponentials in the processing of a speech signal that is to be recognised.

It will be understood that an apparatus, for example a communication unit, and a method of calculating a logarithm of a sum of exponentials, as described above, tend to provide at least one or more of the following advantages:

(i) The proposed implementation of the Sum* Operator with the hyperbolic cosine approach can be used in many different architectures and applications, including those found in communication receivers.
Indeed, the inventive concepts hereinbefore described may be applied wherever a Sum-star Operation is needed. Examples of applications include different iterative procedures such as: turbo-decoding, BCJR decoding, turbo-demodulation, etc.

(ii) The proposed implementation of the Sum* Operator with the hyperbolic cosine approach does not need additional memory for a look-up table. Thus, it provides particular advantage in a hardware implementation, where memory requires additional cost, space and peripheral devices, for example to perform testing, etc. Advantageously, the proposed implementation of the Sum* Operator with the hyperbolic cosine approach is equally applicable to a software-based design.

Whilst specific, and preferred, implementations of the present invention are described above, it is clear that one skilled in the art could readily apply further variations and modifications of such inventive concepts.
Thus an apparatus, for example a digital communication unit, and method for calculating a logarithm of a sum of exponentials have been provided wherein at least some of the aforementioned disadvantages with prior art arrangements have been alleviated.

## Claims

1. Apparatus for performing one or more probabilistic calculations wherein one or more of the probabilistic calculations is a logarithm of a sum of exponentials, the apparatus **characterised in that** a processor calculates a logarithm of a sum of exponentials (340) using a hyperbolic cosine function (320).

2. The apparatus according to Claim 1, wherein said apparatus is a digital communication unit (200) comprising a digital receiver (210), operably coupled to said processor, for receiving a digital signal which is processed and a hyperbolic cosine function (320) used in calculating a logarithm of a sum of exponentials (340).

3. The apparatus according to Claim 1 or Claim 2, wherein said hyperbolic cosine function (320) is used within a correction term, for example of a form:

$$\ln(2.\cosh(x))..$$

4. The apparatus according to Claim 3, wherein said correction term is implemented using an analytical approach.

5. The apparatus according to any of preceding Claim 3 or Claim 4, wherein said correction term (320) is a logarithm of a constant multiplied by a Cosh function, for example:

$$\ln\left(2\cdot\cosh\left(\frac{x-y}{2}\right)\right) \text{ or } \ln\left(\cosh\left(\frac{x-y}{2}\right)\right).$$

6. The apparatus according to Claim 5, wherein said hyperbolic cosine function (320) is approximated and/or implemented using, for example, one or more of the following: higher order approximations, two or more linear functions, or a function substantially as indicated below:

$$\ln\left(2\cdot\cosh\left(\frac{x-y}{2}\right)\right)\approx\begin{cases}0.7 & if \quad \left|\frac{x-y}{2}\right|<0.7\\ \left|\frac{x-y}{2}\right| & f \quad \left|\frac{x-y}{2}\right|\geq 0.7\end{cases}\cdot$$

**7.** The apparatus according to any preceding Claim, wherein said logarithm of a sum of exponentials (340) is:

$$Sum^{*}(x,y)=\ln\left(e^{x}+e^{y}\right)=\frac{x+y}{2}+\ln\left(2\cdot\cosh\left(\frac{x-y}{2}\right)\right).$$

**8.** The apparatus according to any preceding Claim, wherein said logarithm of a sum of exponentials (340) is implemented as a tree structure.

**9.** The apparatus according to any preceding Claim, wherein said logarithm of a sum of exponentials (340) is implemented in a decoder or demodulator of a receiver, for example one employing an iterative algorithm such as a turbo-decoder, a BCJR decoder, a turbo-demodulator.

**10.** A method of calculating a logarithm of a sum of exponentials (340) **characterised by** the step of:

using a hyperbolic cosine function (320) to calculate said logarithm of a sum of exponentials.

**11.** The method of calculating a logarithm of a sum of exponentials (340) according to Claim 10, wherein the method is applied in a digital communication unit, the method further **characterised by** the steps of:

receiving a digital communication signal;
processing said digital communication signal; and
calculating a logarithm of a sum of exponentials (340) of said received digital communication signal using a hyperbolic cosine function (320).

**12.** The method of calculating a logarithm of a sum of exponentials (340) according to Claim 10 or Claim 11, wherein said step of using a hyperbolic cosine function (320) comprises using it as a correction term, for example of a form:

$$\ln(2.\cosh(x))..$$

**13.** The method of calculating a logarithm of a sum of exponentials (340) according to Claim 12, wherein said step of using a hyperbolic cosine function (320) as a correction term comprises calculating a logarithm of a constant multiplied by a Cosh function, for example:

$$\ln\left(2\cdot\cosh\left(\frac{x-y}{2}\right)\right) \text{ or } \ln\left(\cosh\left(\frac{x-y}{2}\right)\right).$$

**FIG. 1 - Prior art**

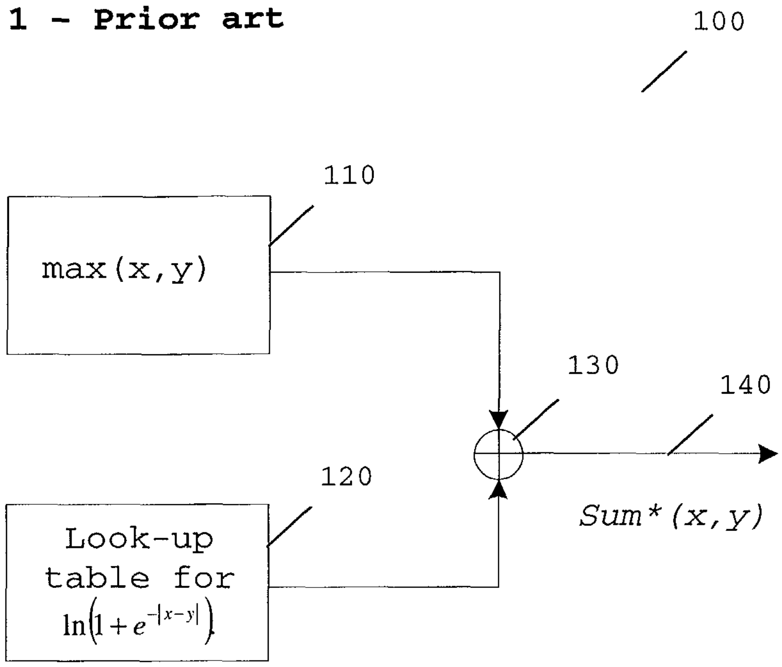


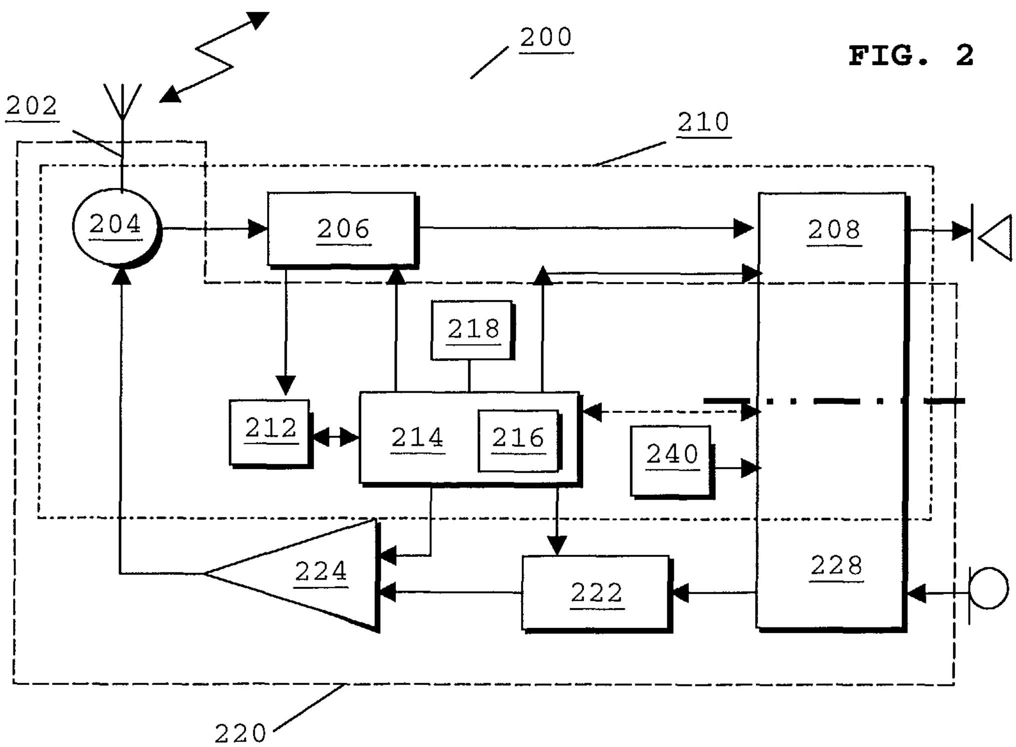


**FIG. 2**

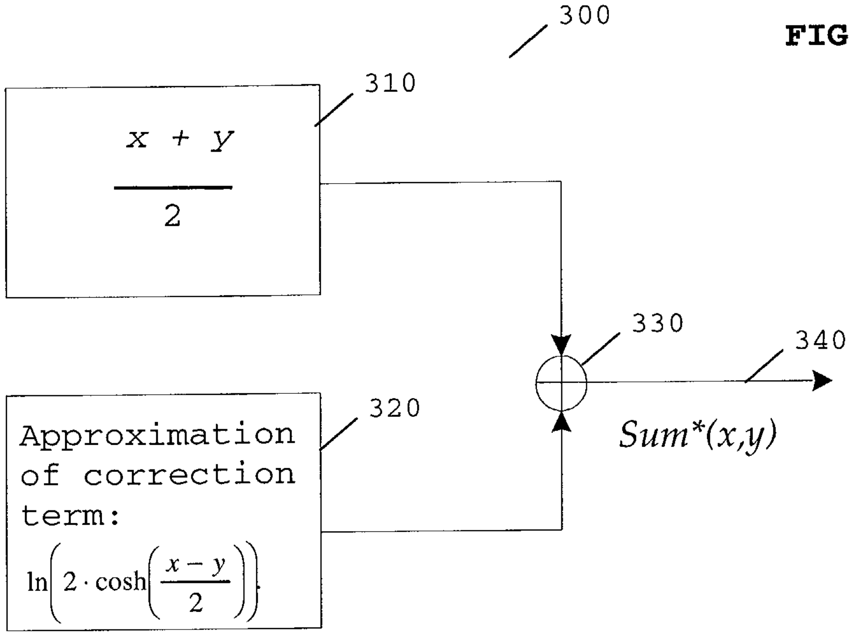
300
310
$\frac{x + y}{2}$
320
Approximation of correction term:
$\ln\left(2 \cdot \cosh\left(\frac{x-y}{2}\right)\right)$
330
340
Sum*(x,y)

FIG. 3

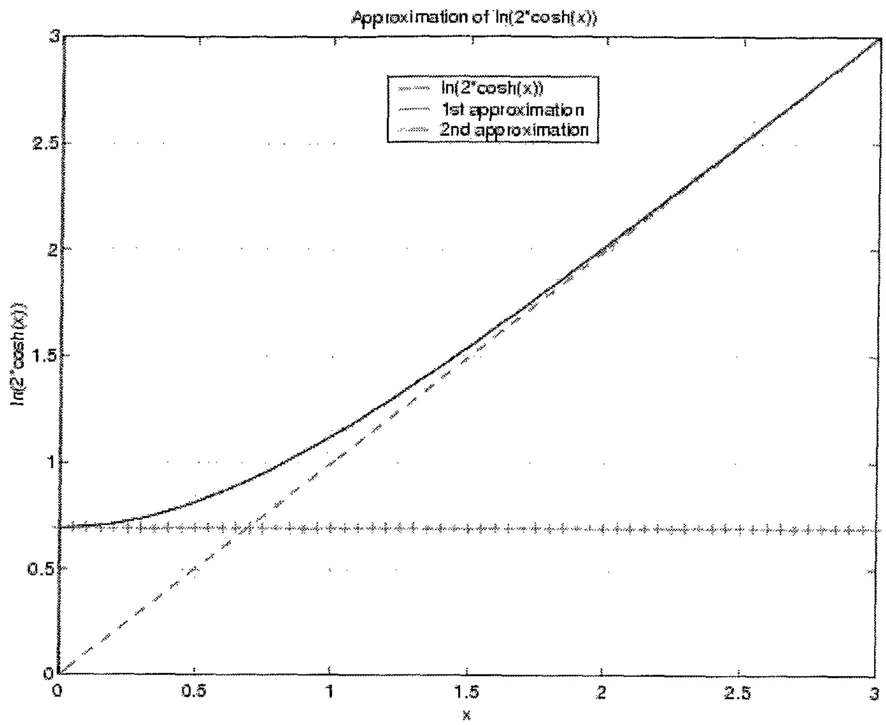


FIG. 4

400

FIG. 5

500

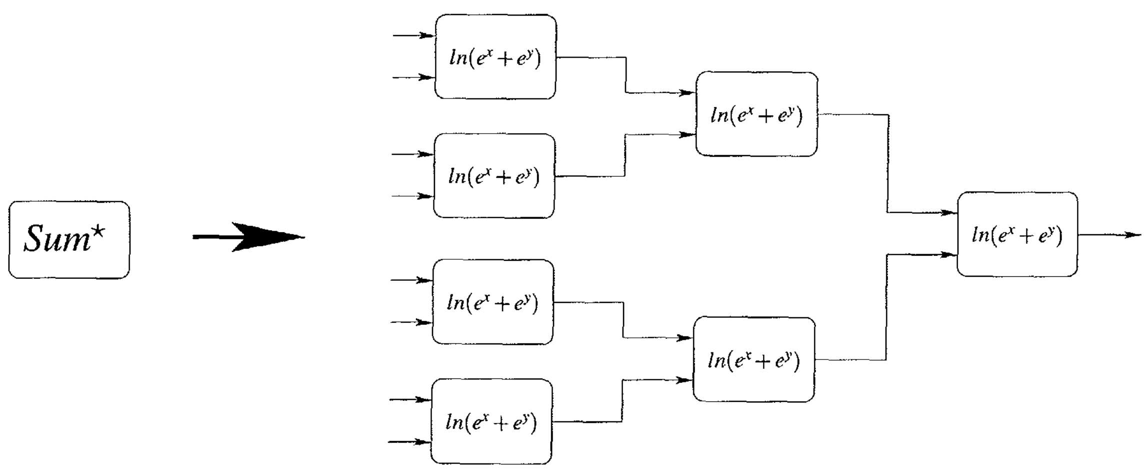

**FIG. 6**

600

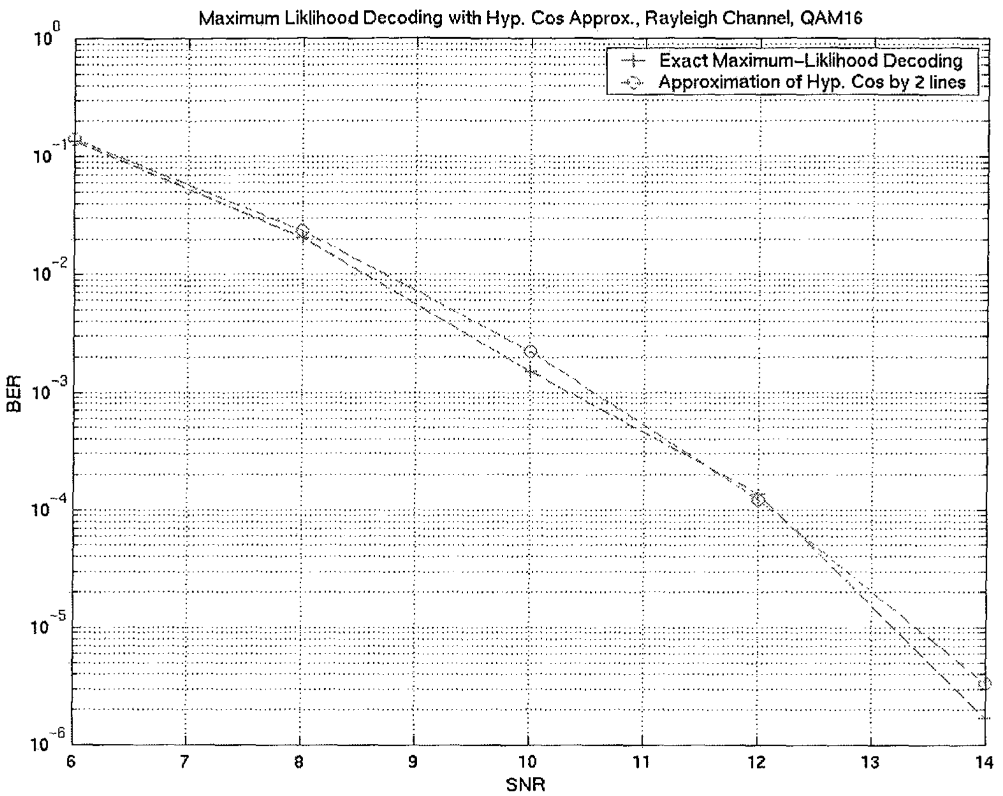
Maximum Liklihood Decoding with Hyp. Cos Approx., Rayleigh Channel, QAM16
Exact Maximum-Liklihood Decoding
Approximation of Hyp. Cos by 2 lines
BER
SNR
$10^0$
$10^{-1}$
$10^{-2}$
$10^{-3}$
$10^{-4}$
$10^{-5}$
$10^{-6}$
6
7
8
9
10
11
12
13
14